**Europäisches Patentamt**

**European Patent Office**

**Office européen des brevets**

(19)

(11) Veröffentlichungsnummer : **0 356 846 B1**

# (12) EUROPÄISCHE PATENTSCHRIFT

(45) Veröffentlichungstag der Patentschrift :
**11.11.92 Patentblatt 92/46**

(51) Int. Cl.⁵ : **B23B 31/08**

(21) Anmeldenummer : **89115318.1**

(22) Anmeldetag : **19.08.89**

(54) Werkzeughalter für Werkzeugmaschinen.

(30) Priorität : **02.09.88 DE 3829800**

(43) Veröffentlichungstag der Anmeldung :
**07.03.90 Patentblatt 90/10**

(45) Bekanntmachung des Hinweises auf die
Patenterteilung :
**11.11.92 Patentblatt 92/46**

(84) Benannte Vertragsstaaten :
**AT CH DE ES FR GB IT LI NL SE**

(56) Entgegenhaltungen :
**DE-A- 2 001 007**
**FR-A- 2 393 642**
**GB-A- 592 701**
**GB-A- 2 084 061**

(73) Patentinhaber : **Wellach, Adolf**
**Ilexweg 8**
**W-4630 Bochum 7 (DE)**

(72) Erfinder : **Wellach, Adolf**
**Ilexweg 8**
**W-4630 Bochum 7 (DE)**

(74) Vertreter : **Zenz, Joachim Klaus, Dipl.-Ing. et al**
**Patentanwälte Zenz, Helber & Hosbach Am**
**Ruhrstein 1**
**W-4300 Essen 1 (DE)**

EP 0 356 846 B1

Jouve, 18, rue Saint-Denis, 75001 PARIS

## Beschreibung

Die Erfindung betrifft einen Werkzeughalter für Werkzeugmaschinen mit einem maschinenseitigen und einem werkzeugseitigen Halterteil, einer zwischen den beiden Halterteilen angeordneten Federeinrichtung, die einen Längenausgleich auf Zug und Druck ermöglicht und für den Längenausgleich auf Druck eine Druckfeder umfaßt, einer Mitnehmereinrichtung, die die beiden Halterteile längsverschieblich und drehfest miteinander koppelt, und einer Kupplung, die einer Werkzeugaufnahmehülse Radialbewegungen quer zur Drehachse gestattet.

Derartige Werkzeughalter werden bevorzugt beim Gewindeschneiden verwendet. Das Werkzeug wird mit hoher Vorschubkraft an die Bohrung des Werkstücks angesetzt, um einen möglichst sofortigen Anschnitt zu erzielen. Der Längenausgleich auf Druck verhindert dabei unzulässige Stoßbelastungen. Im weiteren Verlauf des Gewindeschneidens wird mit einem Vorschub gearbeitet, der etwas geringer als die Steigung des Gewindes ist. Die Differenz wird kompensiert durch den Längenausgleich auf Zug. Letzterer wird auch wirksam, wenn das Werkzeug nach dem Abschalten des Drehantriebs und des Vorschubs noch nachläuft. Die Kupplung, die der Werkzeugaufnahme Radialbewegungen gestattet, gleicht Achsversatzfehler zwischen dem Werkzeug und der Bohrung aus. Die Kupplung kann im einen oder im anderen Halterteil angeordnet sein.

Im Laufe des Betriebes hat es sich gezeigt, daß die Federeinrichtung so hohen Belastungen unterliegt, daß sie rasch ermüdet. Dies gilt insbesondere für den Längenausgleich auf Druck. Hier führt eine Ermüdung der Federeinrichtung dazu, daß die für den Anschnitt erforderliche Vorschubkraft immer später aufgebaut wird. Dadurch wird ein zunehmender Anteil des vorprogrammierten Vorschubes verbraucht, bevor das Werkzeug in die Bohrung eindringt. Die Folge ist, daß die Gewindetiefe nicht das erforderliche und vorprogrammierte Maß erreicht. Um diesem Nachteil zu begegnen, ist ein häufiges Nachstellen der Programmierung zum Ausgleich der Federermüdung erforderlich.

Der Erfindung liegt die Aufgabe zugrunde, den eingangs genannten Werkzeughalter derart weiterzuentwickeln, daß ein durch Ermüdung der Federeinrichtung bedingtes häufiges Nachstellen der Programmierung entfällt.

Zur Lösung dieser Aufgabe ist der Werkzeughalter nach der Erfindung dadurch gekennzeichnet, daß die Druckfeder aus mindestens einem im wesentlichen massiven Element aus elastischem Kunststoff bestehen.

Überraschenderweise wurde gefunden, daß die Ermüdung der Federeinrichtung weniger auf vergleichsweise langhubige Lastwechsel zurückzuführen ist, sondern vielmehr vorwiegend auf die während des Schneidvorganges auftretenden kurzhubigen, aber hochfrequenten Vibrationen. Herkömmliche Federeinrichtungen, die vorwiegend mit Schraubenfedern aus Federstahl arbeiten, sind diesen Vibrationen auf die Dauer offenbar nicht gewachsen. Der Erfindung liegt die Erkenntnis zu grunde, daß die Dämpfung der Vibrationen den wesentlichen Faktor für ein ermüdungsfreies Arbeiten der Federeinrichtung bildet. Überraschenderweise vereinigt das vorzugsweise massive Element aus elastischem Kunststoff sehr gute Federeigenschaften mit sehr guten Dämpfungseigenschaften. Die Praxis hat gezeigt, daß ein Nachstellen der Programmierung, wenn überhaupt, erst nach sehr langen Standzeiten erforderlich wird. In der Regel treten vorher produktionsbedingte Stillstandszeiten auf, die ein Austauschen des billig als Massenartikel herstellbaren Elements aus Kunststoff ermöglichen.

Die Vibrationen übertragen sich auch auf den Längenausgleich auf Zug. Insoweit kann eine Ermüdung der Federeinrichtung dazu führen, daß das Werkzeug unzulässig lange nachläuft und ggf. auf den Boden der Bohrung aufläuft.

Um auch hier Abhilfe zu schaffen, ist der Werkzeughalter nach der Erfindung ferner dadurch gekennzeichnet, daß die Federeinrichtung für den Längenausgleich auf Zug eine Druckfeder aufweist, die aus mindestens einem im wesentlichen massiven Element aus elastischem Kunststoff besteht.

Grundsätzlich kommen sämtliche Kunststoffe in Frage, die die gewünschten Feder- und Dämpfungseigenschaften in sich vereinigen. Als besonders vorteilhaft hat sich erwiesen, daß das massive Element aus geschäumtem, offen- und geschlossenzelligem Polyurethan-Elastomer besteht. Der gemischtzellige Aufbau gewährleistet neben den gewünschten Eigenschaften eine Volumenkompressibilität des Materials, die große Freiheit bezüglich der konstruktiven Gestaltung gewährt.

Vorzugsweise ist die den Längenausgleich auf Zug ermöglichende Druckfeder weicher als die andere Druckfeder, da erstere geringere Kräfte aufzunehmen hat. Die unterschiedliche Federhärte kann durch Materialwahl und/oder Formgebung eingestellt werden.

Erfindungsgemäß kann jede Druckfeder von einem einzigen Element aus Kunststoff gebildet werden. Besteht hingegen jede Druckfeder aus einem Paket von gleichen Elementen aus Kunststoff, so können die unterschiedlichsten Kombination von Federhärten auf der Basis eines einzigen Ausgangselementes vorgewählt werden. Unter diesen Umständen kann erfindungsgemäß die den Längenausgleich auf Zug ermöglichende Druckfeder aus einer größeren, vorzugsweise der doppelten Anzahl von gleichen Elementen aus Kunststoff bestehen als die andere Druckfeder. Erstere wird entsprechend weicher als letztere.

Gute Ergebnisse, was die Kombination von Feder- und Dämpfungs-eigenschaften anbelangt, werden dadurch erzielt, daß die Elemente aus Kunststoff im Querschnitt linsenförmig ausgebildet sind. Dabei hat es sich als vorteilhaft erwiesen, daß zwischen benachbarten, im Querschnitt linsenförmig ausgebildeten Elementen aus Kunststoff Abstandsscheiben vorgesehen sind. Die Abstandsscheiben sorgen dafür, daß sich die linsenförmigen Elemente nicht gegeneinander oder übereinander verschieben.

Auf die Verwendung von Abstandsscheiben kann erfindungsgemäß dadurch verzichtet werden, daß die Elemente aus Kunststoff mit etwa planparallelen Seitenwänden versehen sind. Hier tritt keine Gefahr der Verschiebung auf.

Aus Gründen der Verformbarkeit kann es vorteilhaft sein, daß die mit etwa planparallelen Seitenwänden versehenen Elemente aus Kunststoff eine umlaufende Umfangskerbe aufweisen.

Die Elemente aus Kunststoff können eine beliebige Umfangsform besitzen, beispielsweise quadratisch sein. Aus herstellungstechnischen Gründen wird man vorwiegend einen kreisförmigen Umfang wählen.

In wesentlicher Weiterbildung der Erfindung ist der Werkzeughalter ferner dadurch gekennzeichnet, daß mindestens die den Längenausgleich auf Zug ermöglichende Druckfeder eine vom Federweg im wesentlichen unabhängige Federkraft besitzt. Damit läßt sich die Arbeitsweise des Werkzeughalters ganz erheblich verbessern. Häufig kommt es nämlich insbesondere beim Gewindeschneiden vor, daß das Werkzeug vor allem beim Rücklauf an einem Span o.dgl. hängenbleibt. Wenn nun aufgrund des damit verbundenen Längenausgleichs die Federkraft, d.h., die auf das Werkzeug einwirkende Zugkraft zunimmt, so kann dies dazu führen, daß das Werkzeug zwar irgendwann wieder freikommt, dabei allerdings das Gewinde zerschneidet. Es entsteht also Ausschuß, ohne daß dieser sofort bemerkt wird. Vielmehr durchläuft das Werkstück weitere, u.U. kostenaufwendige Bearbeitungsschritte, bis sich schließlich erst anläßlich der Montage der Fehler zeigt. Ganz besonders nachteilig ist es, wenn sich der Fehler maschinenbedingt wiederholt. Dabei wird dann eine ganze Serie von Ausschußwerkstücken erzeugt, und zwar solange, bis die ersten Werkstücke in die Montage gelangen.

Erfindungsgemäß hingegen erhöht sich die Federkraft nicht, wenn es durch ein Hängenbleiben des Werkzeugs zu einem Längenausgleich kommt. Wird das Werkzeug wieder frei, so setzt sich der Arbeitsvorgang ohne Krafterhöhung weiter fort. Kommt das Werkzeug nicht wieder frei, so wird der volle Längenausgleich durchgeführt, und es kommt sodann zu einem abrupten Abreißen des Werkzeugs. Damit wird der Fehler sofort offenkundig, ohne daß weiterer Aufwand in Ausschuß investiert oder Ausschuß serienweise erzeugt würde.

Die obigen Überlegungen gelten nicht nur für den Längenausgleich auf Zug, sondern auch für den auf Druck. Ferner sind neben Gewindeschneidmaschinen vor allem auch Bohr- und Reibvorrichtungen betroffen.

Zur Erzielung der erfindungsgemäßen Federkennlinie kann die Druckfeder aus Elementen unterschiedlicher Shore-Härte bestehen. Auch ist es erfindungsgemäß möglich, daß die Druckfeder aus Elementen unterschiedlicher Formgebung besteht. Die diesbezüglichen Variationsmöglichkeiten sind vielfältig. So kann die Außenkontur der Elemente unterschiedlich sein, oder auch lediglich deren Durchmesser. Ferner schlägt die Erfindung vor, daß die Druckfeder aus Elementen mit zwischengelegten Abstandsscheiben unterschiedlicher Dicke und/oder unterschiedlichen Durchmessers besteht. Sämtliche Kombinationsmöglichkeiten der angegeben Maßnahmen liegen ebenfalls im Bereich der Erfindung.

Eine konstruktiv besonders günstige Ausführungsform ergibt sich erfindungsgemäß dadurch, daß die Elemente aus Kunststoff zwischen axialen Anschlägen hintereinander angeordnet sind und zwischen sich einen Betätiger aufnehmen, wobei ein Halterteil mit den axialen Anschlägen und der andere mit dem Betätiger verbunden ist. Die beiden Druckfeder werden also abwechselnd von ein und demselben Betätiger verspannt. Dabei kann diese Anordnung ferner dadurch gekennzeichnet sein, daß der Betätiger als Scheibe auf einer die axialen Anschläge durchsetzenden Stange befestigt ist und daß die Elemente aus Kunststoff beidseitig der Scheibe auf die Stange aufgesteckt sind. Bei einem Austausch der Federeinrichtung entnimmt man die Stange mit dem Betätiger und den beiden Druckfedern als komplette Baugruppe und ersetzt sie durch eine neue. Die entnommene Stange kann dann ohne weiteres mit neuen Elementen aus Kunststoff bestückt werden.

Aus konstruktiven und herstellungstechnischen Gründen kann der Werkzeughalter nach der Erfindung ferner gekennzeichnet sein durch ein in einen der Halterteile eingeklebtes rohrförmiges Gehäuse, welches die Elemente aus Kunststoff aufnimmt und mit seinem Boden und seinem verschraubten Deckel die Anschläge für die Druckfedern bildet.

Bei dem Werkzeughalter nach der Erfindung entfällt die periodische Entlastung der Kupplung durch die Ermüdung der Federeinrichtung. Die Kupplung ist daher dauernd extrem hohen Belastungen ausgesetzt. Um diesen standzuhalten, kann der Werkzeughalter nach der Erfindung dadurch gekennzeichnet sein, daß die Kupplung eine achsenrechte Kupplungsscheibe aufweist, deren planparallele Fläche auf planparallelen Flächen des werkzeugseitigen Halterteils und der Werkzeugaufnahmehülse gleiten, und daß die Kupplungsscheibe mit Schlitzen versehen ist, in die einerseits Bolzen des werkzeugseitigen Halterteils und andererseits Bolzen der Werkstückaufnahme eingreifen, wobei die Schlitze für die Bolzen des werkzeugseitigen Halterteils senkrecht zu denen für die Bolzen der Werkzeugaufnahmehülse ausgerichtet sind. Es handelt sich hierbei um eine sogenannte Oldham-Kupplung, allerdings mit der Besonderheit, daß zwischen der Kupplungsscheibe und den zugehörigen Stützflächen keinerlei Wälzelemente vorgesehen sind. Vielmehr wird mit reiner Gleitlagerung gearbeitet und dementsprechend mit hervorragenden Standzeiten.

Um die Leichtgängigkeit der Kupplung zu erhöhen und damit die Maßgenauigkeit des Bearbeitungsvorgangs zu verbessern, kann erfindungsgemäß mindestens je eine der aufeinander gleitenden Flächen der Kupplung aus einem Kunststoff hoher Gleitfähigkeit bestehen. Vorzugsweise besteht die Kupplungsscheibe aus einem Kunststoff hoher Gleitfähigkeit.

Als konstruktiv besonders vorteilhaft hat es sich erwiesen, daß die Mitnehmereinrichtung ein Paar von achssenkrechten Rollen aufweist, die im werkzeugseitigen Halterteil gelagert sind und in axiale Führungen des maschinenseitigen Halterteils eingreifen. Dabei können die Führungen aus herstellungstechnischen Gründen erfindungsgemäß in einer Hülse ausgebildet sein, die mit dem maschinenseitigen Halterteil verklebt ist. Ein besonders günstiger Abschluß der Konstruktion nach außen hin ergibt sich dadurch, daß die mit dem maschinenseitigen Halterteil verklebte Hülse von einem mit dem werkzeugseitigen Halterteil verbundenen Bund abdichtend übergriffen wird.

Der Werkzeughalter nach der Erfindung eignet sich insbesondere zum Gewindeschneiden, kann jedoch auch mit gleichem Vorteil zum Ansenken und Fräsen verwendet werden, da dort vergleichbare Arbeitsbedingungen auftreten.

Die Erfindung wird im folgenden anhand bevorzugter Ausführungsbespiele im Zusammenhang mit der beiliegenden Zeichnung näher erläutert. Die Zeichnung zeigt in:

Fig. 1 einen Längsschnitt durch einen erfindungsgemäßen Werkzeughalter;

Fig. 2 eine Einzelheit aus Fig. 1 in abgewandelter Ausführungsform.

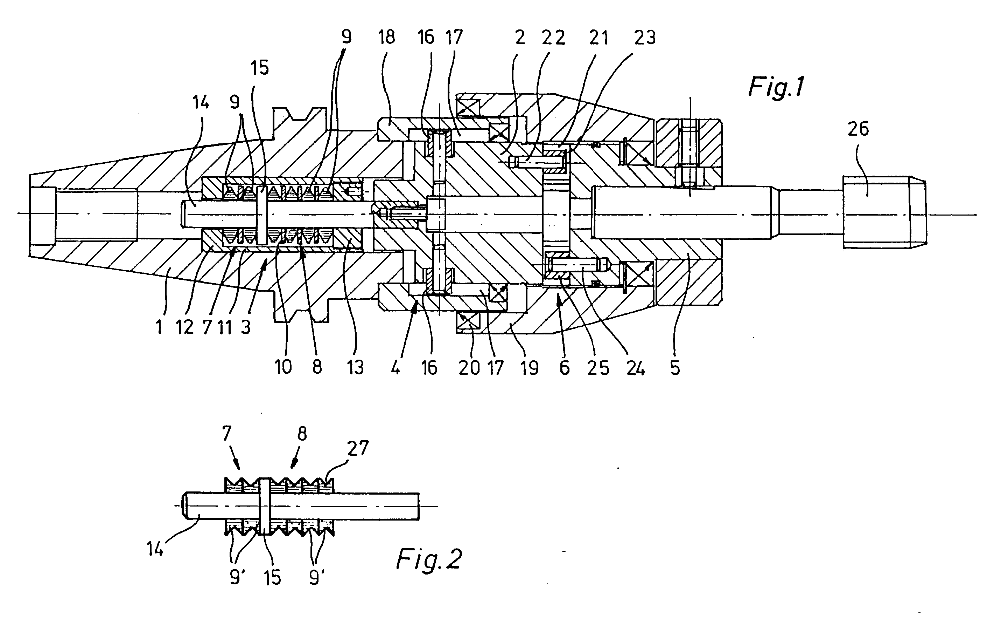

Gemäß Figur 1 umfaßt der Werkzeughalter einen maschinenseitigen Halterteil 1 und einen werkzeugseitigen Halterteil 2. Zwischen den beiden Halterteilen 1 und 2 ist eine Federeinrichtung 3 angeordnet, die für einen Längenausgleich auf Zug und Druck sorgt. Ferner sind die Halterteile 1 und 2 über eine Mitnehmereinrichtung 4 längsverschieblich und drehfest gekoppelt. Zwischem dem werkzeugseitigen Halterteil 2 und einer Werkzeugaufnahmehülse 5 ist eine Kupplung 6 angeordnet, die der Werkzeugaufnahmehülse 5 Radialbewegungen gestattet.

Die Federeinrichtung 3 umfaßt eine Druckfeder 7 für den Längenausgleich auf Druck und eine Druckfeder 8 für den Längenausgleich auf Zug. Beide Druckfedern bestehen aus einem Paket von Elementen 9 aus geschäumtem, gemischtzelligem Polyurethan-Elastomer. Dieses Material besitzt gute Federeigenschaften und gleichzeitig gute Dämpfungseigenschaften. Die Federeinrichtung 3 neigt daher nicht zu Ermüdungen.

Die Druckfeder 7 besteht aus zwei Elementen 9, während die Druckfeder 8 vier Elemente 9 umfaßt. Letztere ist entsprechend weicher.

Die Elemente 9 sind linsenförmig ausgebildet. Um Relativverschiebungen zu vermeiden, ist zwischen den einzelnen linsenförmigen Elementen 9 jeweils eine Abstandsscheibe 10 angeordnet.

Die beiden Druckfedern 7 und 8 werden von einem Gehäuse 11 umschlossen, welches in den maschinenseitigen Halterteil 1 eingeklebt ist und mit seinem Boden 12 sowie seinem verschraubten Deckel 13 Anschläge für die beiden Druckfedern bildet. Die Elemente 9 sind auf eine Stange 14 aufgesteckt, die mit dem werkzeugseitigen Halterteil 2 verschraubt ist und sich durch das Gehäuse 11 hindurch erstreckt. Fest auf der Stange 14 angeordnet ist ein scheibenförmiger Betätiger 15 für die beiden Druckfedern 7 und 8. Die Baugruppe, bestehend aus Stange 14 und Druckfedern 7, 8, ist leicht austauschbar.

Die Mitnehmereinrichtung 4 weist achssenkrechte Rollen 16 auf, welche im werkzeugseitigen Halterteil 2 gelagert sind und in axiale Führungen 17 eingreifen. Die Führungen 17 werden von einer Hülse 18 gebildet, welche mit dem maschinenseitigen Halterteil 1 verklebt ist. Die Hülse 18 wird von einem Bund 19 übergriffen, und zwar unter Zwischenschaltung eines Simmerrings 20. Der Bund 19 ist mit dem werkzeugseitigen Halterteil 2 verschraubt.

Die Kupplung 6 weist eine Kupplungsscheibe 21 auf, die in Gleitflächenberührung sowohl mit dem werkzeugseitgen Halterteil 2 als auch mit der Werkzeugaufnahmehülse 5 steht. Sie ist mit vier radialen Schlitzen versehen, die in einem Winkelabstand von 90° zueinander liegen. In ein Paar von einander gegenüberliegenden Schlitzen greifen Bolzen 22 des werkzeugseitigen Halterteiles 2 ein, und zwar unter Zwischenschaltung von Rollen 23, siehe den oberen Teil von Figur 1. In das andere Paar von einander gegenüberliegenden Schlitzen greifen Bolzen 24 der Werkzeugaufnahmehülse 5 ein, und zwar wiederum unter Zwischenschaltung von Rollen 25. Dies ist im unteren Teil von Fig.1 dargestellt. Insoweit zeigt der untere Teil von Fig. 1 also eine Schnittebene, die um 90° versetzt zur Zeichenebene liegt. Die aus Kunststoff bestehende Kupplungsscheibe 21 ist bei hoher Belastbarkeit sehr leichtgängig gegenüber dem werkzeugseitigen Halterteil 2 und der Werkzeugaufnahmehülse 5 verschieblich. Sie ermöglicht letzterer die gewünschten Radialbewegungen zum Ausgleichen eines Achsversatzes.

Als Werkzeug ist ein Gewindeschneidwerkzeug 26 dargestellt, da der erfindungsgemäße Werkzeughalter insbesondere für das Gewindeschneiden vorgesehen ist. Er läßt sich jedoch mit gleichem Vorteil auch beim Senken und Fräsen einsetzen.

Figur 2 zeigt die Stange 24 mit den Druckfedern 7 und 8 und dem dazwischenliegenden scheibenförmigen Betätiger 15. Im vorliegenden Falle bestehen die Druckfedern 7 und 8 jedoch nicht aus linsenförmigen Elementen 9, sondern aus Elementen 9′ mit planparallelen Seiten. Die Zwischenschaltung von Abstandsscheiben 10 kann entfallen. Zur Verbesserung der Federcharakteristik ist jedes Element 9′ mit einer umlaufenden Umfangskerbe 27 versehen. Die Elemente 9′ besitzen, ebenso wie die Elemente 9, einen kreisförmigen Umfang.

In beiden Fällen besitzen die Druckfeder 7 und 8 eine vom Federweg im wesentlichen unabhängige Federkraft. Sie bestehen hierzu aus Elementen 9 bzw. 9′ unterschiedlicher Shore-Härte.

Im Rahmen der Erfindung sind Abwandlungsmöglichkeiten gegeben. So können die Elemente 9 und 9′ ohne weiteres einen beispielsweise polygonalen Umfang besitzen. Gleiches gilt für die Abstandsscheiben 10, wobei auch deren Dicke unterschiedlich sein kann. Mit diesen Maßnahmen läßt sich die Federcharakteristik beeinflussen, und zwar insbesondere derart, daß die Federkraft im wesentlichen unabhängig wird vom Federweg. Auch kann die Federeinrichtung 3 dergestalt umgekehrt werden, daß der Betätiger 15 am maschinenseitigen Halterteil 1 befestigt und daß Gehäuse 11 im werkzeugseitigen Halterteil 2 angeordnet ist. Ferner kann bei entsprechender anderer Anordnung der Anschläge für die beiden Druckfedern 7 und 8 auf das Gehäuse 11 verzichtet werden. Für die Kupplung 6 gilt, daß sie an beliebiger Stelle des Werkzeughalters vorgesehen werden kann, also auch im maschinenseitigen Halterteil 1. Ferner kann für die Kupplung 6 ein Schmiermittelreservoir vorgesehen werden.

Als erfindungswesentlich offenbart gelten auch solche Kombinationen der beanspruchten Merkmale, die von der beiliegenden Anspruchsfassung abweichen.

## Patentansprüche

1. Werkzeughalter für Werkzeugmaschinen mit einem maschinenseitigen und einem werkzeugseitigen Halterteil (1, 2), einer zwischen den beiden Halterteilen angeordneten Federeinrichtung (3), die einen Längenausgleich auf Zug und Druck ermöglicht und für den Längenausgleich auf Druck eine Druckfeder (7) umfaßt, einer Mitnehmereinrichtung (4), die die beiden Halterteile längsverschieblich und drehfest miteinander koppelt, und einer Kupplung (6), die einer Werkzeugaufnahmehülse (5) Radialbewegungen gestattet,

**dadurch gekennzeichnet,**
daß die Druckfeder (7) aus mindestens einem im wesentlichen massiven Element (9, 9′) aus elastischem Kunststoff besteht.

2. Werkzeughalter nach Anspruch 1, dadurch gekennzeichnet, daß die Federeinrichtung (3) für den Längenausgleich auf Zug eine Druckfeder (8) aufweist, die aus mindestens einem im wesentlichen massiven Element (9, 9′) aus Kunststoff besteht.

3. Werkzeughalter nach Anspruch 1 oder 2, dadurch gekennzeichnet, daß das Element (9,9′) aus geschäumtem, gemischtzelligem Polyurethan-Elastomer bestehen.

4. Werkzeughalter nach Anspruch 2 oder 3, dadurch gekennzeichnet, daß die den Längenausgleich auf Zug ermöglichende Druckfeder (8) weicher als die andere Druckfeder (7) ist.

5. Werkzeughalter nach einem der Ansprüche 1 bis 4, dadurch gekennzeichnet, daß mindestens die den Längenausgleich auf Zug ermöglichende Druckfeder (8) eine vom Federweg im wesentlichen unabhängige Federkraft besitzt.

6. Werkzeughalter nach Anspruch 5, dadurch gekennzeichnet, daß die Druckfeder (7, 8) aus Elementen (9, 9′) unterschiedlicher Shore-Härte und/oder unterschiedlicher Formgebung besteht.

7. Werkzeughalter nach Anspruch 5 oder 6, dadurch gekennzeichnet, daß die Druckfeder (7, 8) aus Elementen (9, 9′) mit zwischengelegten Abstandsscheiben (10) vorzugsweise unterschiedlicher Dicke und/oder unterschiedlichen Durchmessers besteht.

8. Werkzeughalter nach einem der Ansprüche 1 bis 7, dadurch gekennzeichnet, daß die Elemente (9, 9′) aus Kunststoff zwischen axialen Anschlägen hintereinander angeordnet sind und zwischen sich einen Betätiger (15) aufnehmen, wobei der eine Halterteil (1, 2) mit den axialen Anschlägen und der andere Halterteil (1, 2) mit dem Betätiger (15) verbunden ist.

9. Werkzeughalter nach Anspruch 8, dadurch gekennzeichnet, daß der Betätiger (15) als Scheibe auf einer die axialen Anschläge durchsetzenden Stange (14) befestigt ist und daß die Elemente (9, 9′) aus Kunststoff beidseitig der Scheibe auf die Stange aufgesteckt sind.

10. Werkzeughalter nach einem der Ansprüche 1 bis 9, dadurch gekennzeichnet, daß die Mitnehmereinrichtung (4) ein Paar von achssenkrechten Rollen (16) aufweist, die im werkzeugseitigen Halterteil (2) gelagert sind und in axiale Führungen (17) des maschinenseitigen Halterteils (1) eingreifen.

## Claims

1. Tool holder for machine tools with a holding portion (1,2) on the machine side and on the tool side, a spring device (3) which is arranged between the two holding portions and which renders a length compensation possible in tension and compression and includes a compression spring (7) for the length compensation in compression, a carrier device (4) which longitudinally slidably and rotationally fixedly couples the two holding portions together and a coupling (6) which permits radial movements of a tool receiving sleeve (5), characterised in that the compression spring (7) comprises at least one substantially massive element (9,9') of elastic plastics material.

2. Tool holder as claimed in claim 1, characterised in that the spring device (3) for the length compensation in tension has a compression spring (8) which comprises at least one substantially massive element (9,9') of plastics material.

3. Tool holder as claimed in claim 1 or 2, characterised in that the element (9,9') comprises foamed mixed-celled polyurethane elastomer.

4. Tool holder as claimed in claim 2 or 3, characterised in that the compression spring (8) which renders the length compensation in tension possible is softer than the other compression spring (7).

5. Tool holder as claimed in one of claims 1 to 4, characterised in that at least the compression spring (8) which renders the length compensation in tension possible has a spring force which is substantially independent of the spring deflection.

6. Tool holder as claimed in claim 5, characterised in that the compression spring (7,8) comprises elements (9,9') of differing Shore hardness and/or of differing shape.

7. Tool holder as claimed in claim 5 or 6, characterised in that the compression spring (7,8) comprises elements (9,9') with interposed spacer discs (10), preferably of differing thickness and/or differing diameter.

8. Tool holder as claimed in one of claims 1 to 7, characterised in that the elements (9,9') of plastics material are arranged behind one another between axial abutments and accommodate an actuator (15) between them, the one holding portion (1,2) being connected to the axial abutments and the other holding portion (1,2) being connected to the actuator (15).

9. Tool holder as claimed in claim 8, characterised in that the actuator (15) is a disc and is secured to a rod (14) which passes through the axial abutments and that the elements (9,9') of plastics material are pushed onto the rod on both sides of the disc.

10. Tool holder as claimed in one of claims 1 to 9, characterised in that the carrier device (4) has a pair of rollers (16) perpendicular to the axis which are mounted in the holding portion (2) on the tool side and engage in axial guides (17) on the holding portion (1) on the machine side.

## Revendications

1. Porte-outils pour machines-outil, comportant une partie support côté machine et une partie support côté outil (1,2), un dispositif à ressort (3), disposé entre les deux parties support et permettant une compensation de longueur en traction et compression et comprenant un ressort de pression (7), pour assurer la compensation de longueur sous compression, un dispositif d'entraînement (4), mobile longitudinalement et bloqué en rotation, assurant le couplage entre les deux parties support, et un accouplement (6) permettant à une douille de réception d'outil (5) d'effectuer des mouvements radiaux, caractérisé en ce que le ressort de pression (7) est composé d'au moins un élément (9,9') sensiblement massif, en matériau synthétique.

2. Porte-outil selon la revendication 1, caractérisé en ce que le dispositif à ressort (3) présente, pour assurer la compensation de longueur sous traction, un ressort de compression (8) composé d'au moins un élément (9,9') sensiblement massif, en matériau synthétique.

3. Porte-outil selon la revendication 1 ou 2, caractérisé en ce que l'élément (9,9') est composé d'un élastomère alvéolaire, à base de polyuréthane, dont les cellules sont mélangées.

4. Porte-outil selon la revendication 2 ou 3, caractérisé en ce que le ressort de pression (8) qui permet la compensation de longueur sous traction est plus souple que l'autre ressort de pression (7).

5. Porte-outil selon l'une des revendications 1 à 4, caractérisé en ce qu'au moins le ressort de pression (8) qui permet la compensation de longueur sous traction offre une force élastique pratiquement indépendante de la course élastique.

6. Porte-outil selon la revendication 5, caractérisé en ce que les ressorts de pression (7,8) sont composés d'éléments (9,9') à dureté Shore différente et/ou à conformation différente.

7. Porte-outil selon la revendication 5 ou 6, caractérisé en ce que les ressorts de pression (7,8) sont composés d'éléments (9, 9') à disques intercalaires (10) interposés, de préférence d'épaisseurs différentes et/ou de diamètres différents.

8. Porte-outil selon l'une des revendications 1 à 7, caractérisé en ce que les éléments (9,9') sont disposés les uns derrière les autres entre des butées axiales et reçoivent entre eux un organe d'actionnement (15), une partie support (1,2) étant reliée aux butées axiales et l'autre partie support (1,2) étant reliée à l'organe d'actionnement (15).

9. Porte-outil selon la revendication 8, caractérisé en ce que l'organe d'actionnement (15) est fixé, sous forme de rondelle, sur une tige (14) traversant les butées axiales, et en ce que les éléments (9,9') en matière synthétique sont enfichés des deux côtés de la rondelle, sur la tige.

10. Porte-outil selon l'une des revendications 1 à 9, caractérisé en ce que le dispositif d'entraînement (4) présente un couple de rouleaux (16) d'axes perpendiculaires à la direction de son axe, montés à rotation dans la partie support côté outil (2) et s'engageant dans des guidages axiaux (17) de la partie support côté machine (1).

Fig.1

Fig.2